# EUROPEAN PATENT SPECIFICATION

(11) **EP 2 192 844 B1**
(45) Date of publication and mention of the grant of the patent: **16.02.2011**
(21) Application number: 08787394.9
(22) Date of filing: 21.08.2008
(51) Int. Cl.: A23F 3/18

(54) **PROCESS FOR EXTRACTING THEAFLAVINS FROM TEA**
VERFAHREN ZUM EXTRAHIEREN VON THEAFLAVINEN AUS TEE
PROCÉDÉ D'EXTRACTION DES THÉAFLAVINES DU THÉ

(30) Priority: 28.09.2007 IN MU19252007; 14.11.2007 EP 07120638
(43) Date of publication of application: 09.06.2010
(73) Proprietor: Unilever PLC, London EC4Y 0DY (GB); Unilever N.V., 3013 AL Rotterdam (NL)
(72) Inventor: MEHARE, Yogesh, Prabhakarrao, Maharastra 442201 (IN); MULLICK, Ashim, Haryana-122002 (IN)
(74) Representative: Keenan, Robert Daniel
(86) International application number: PCT/EP2008/060958
(87) International publication number: WO 2009/040194

(56) References cited:
- EP-A- 0 552 519
- EP-A- 0 891 973
- JP-A- 5 139 972
- US-A- 5 532 012
- US-A- 5 804 567
- US-A1- 2002 146 472

## Description

### TECHNICAL FIELD OF INVENTION

The invention relates to an improved process for extraction of theaflavins from tea.

### BACKGROUND OF THE INVENTION

Two popular tea products are black tea and green tea. Generally, to prepare black tea, fresh leaves of the plant *Camellia sinensis* are withered (a process to allow the plucked tea leaves to lose moisture and bring about chemical / biochemical changes especially in aroma), macerated, fermented (in which process enzymes in the tea leaf use atmospheric oxygen to oxidise various substrates to produce coloured products) and then dried at higher temperatures (to stop the enzyme activities). Green tea is produced by the same process as used for manufacture of black tea except for the absence of the step of exposing the tea leaves to fermentation. Partial fermentation is used to produce intermediate-type teas known as "oolong" tea.

Theaflavins are polyphenols produced during production of tea. Most theaflavins are known to be antioxidants. Therefore there is great interest in the food, beverages and health industry in production and incorporation of theaflavins in various food products. Theaflavins are present in black tea and oolong tea.

Tea leaf, when picked from the tea plant contains polyphenols known as catechins. These catechins are colourless compounds. The four major catechins in tea leaf are epicatechin (EC), epigallocatechin (EGC) epicatechin-3-gallate (ECG) and epigallocatechin-3-gallate (EGCG). Theaflavins are produced during the oxidative fermentation of leaf tea to produce black tea. The above named catechins (and other minor catechins) undergo oxidative biotransformations into dimeric compounds known as theaflavins (TFs) and higher molecular weight compounds known as thearubigins (TRs). The structure of the TFs have been fairly well worked out and the four main theaflavins are known as theaflavin (TF1), theaflavin-3-monogallate (TF2), theaflavin-3'-monogallate (TF3) and theaflavin-3-3'-digallate, (TF4) and conform to general formula (1) given below: 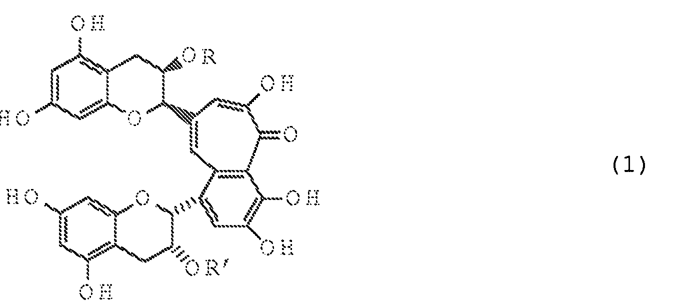 wherein R and R' are independently selected from H and G, and
where G is derived from gallic acid and has formula (2):

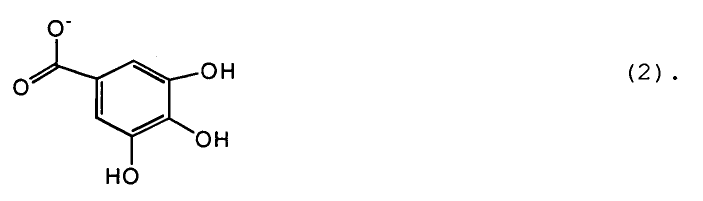

In particular, the four main TFs have formula (1) where:
for TF1 R=R'=H;
for TF2 R= G, R'= H;
for TF3 R=H, R'=G; and
for TF4 R=R'=G.

The characteristic orange and brown colour of brewed black tea is due to the presence of the TFs and the TRs. They also give astringency and body to the brewed tea. TRs are larger in size and darker in colour than TFs.

Tea is a popular, low-cost beverage that is consumed throughout the world. Its consumption in the Indian subcontinent is particularly high. Plain brewed black tea, in general, is in itself known to be healthy to drink. In spite of this, due to the high per-capita consumption of tea, throughout the world, there has been many attempts to make tea healthier. One way to achieve this has been to increase the amount of the healthy theaflavins in tea. One approach to do this has been to manipulate the tea oxidation process to enhance production of theaflavins. Another approach has been to extract theaflavins from good quality black tea, or lower quality tea products like tea fibre, tea powder etc and add-back the extracted theaflavins in to black tea to prepare premium quality tea.

The present inventors have also been working on the problem of providing theaflavin enhanced tea. US 2002/0146472-A describes a process for the extraction of theaflavins by soaking black tea in hot water. The aqueous filtrate thereafter was decaffeinated. The aqueous extract was thereafter extracted with ethyl acetate, to get crude theaflavin. A similar process is described in US 5,532,012 except in this case the theaflavin is extracted from the cream portion of the tea extract. The present inventors have determined that using these known methods of the prior art, there are certain problems with getting high extraction yield or problems in the separation processes. Using water at about 25°C, for extraction of theaflavins from tea, the maximum yield that could be obtained was of the order of about 5-8%. When hot water (of about 80 - 85°C) was used, about 30-35% of the theaflavins could be extracted and the high temperatures employed tended to degrade the theaflavins upon prolonged exposure. When organic solvents like alcohols were used, almost 100% of the theaflavins could be extracted but there were certain downstream separation problems. The theaflavins are highly soluble in solvents like alcohols and ethyl acetate and therefore separating the TFs from the alcohol using well known solvent extraction techniques using solvents like ethyl acetate gave poor overall extraction efficiencies. The present inventors therefore embarked on developing a process for enhancing the extraction of TFs from tea.

In our co-pending Indian patent application 722/MUM/2007, we disclose one method for enhanced extraction of theaflavins from tea which includes the step of contacting tea with an aqueous solution of urea. The present inventors during the course of this work developed an alternative process that also provides enhanced extraction of theaflavins from tea. The inventors surprisingly found that when tea is contacted with water and ethyl acetate in selective amounts, high amount of theaflavins get extracted into the ethyl acetate phase.

EP 0 552 519 (Tea Projects, 1993) describes a process for preparing a decaffeinated tea product which comprises subjecting green, partly processed or black tea leaf to solvent extraction by contacting the said leaf one or more times with an organic solvent medium, wherein the organic solvent medium comprises ethyl acetate and is rich in non-caffeine tea products by (i) being previously subjected to contact with decaffeinated tea or (ii) being previously subjected to contact with non-decaffeinated tea followed by selective removal of caffeine. A preferred process of preparing the organic solvent medium comprises the step of contacting moistened decaffeinated tea with up to 10 times its weight of an organic solvent comprising ethyl acetate, separating off the organic solvent medium so produced and if desired, contacting one or more further batches of moistened decaffeinated tea successively with the organic solvent medium produced by the or each preceding contact respectively. Thus, although tea has been extracted with a mixture of water and ethyl acetate the solvent medium thus produced has been used thereafter to prepare decaffeinated tea. This publication does not teach that a solvent mixture comprising water and ethyl acetate can be used for enhanced extraction of theaflavins.

JP 61-130285 (Mitsui, 1986) describes a process to obtain catechin from tea leaves. The process comprises washing tea leaves with a mixture of mutually compatible hydrophobic and hydrophilic organic solvents (preferably a combination of chloroform and methanol) to remove caffeine and pigments from the leaves and said solvents are distilled out from the leaves. The treated leaves are moistened with water (preferably in a ratio of water to tea leaves in the range of 0.65 to 1.3 parts of water per part of tea leaves) and made to contact with an organic solvent (preferably ethyl acetate) to extract the catechin containing component to the solvent. This publication teaches extraction of catechins from decaffeinated tea leaves using a mixture of water and ethyl acetate and does not teach extraction of theaflavins (which are not present in green tea leaves but are present in fermented or partially fermented tea) from processed tea.

It is thus an object of the present invention to provide for a process for enhanced extraction of theaflavins from tea.

It is another object of the present invention to provide for a process for enhanced extraction of theaflavins from tea using a simple, economical and easy-to-scale-up process.

### SUMMARY OF THE INVENTION

The present invention provides for a process for extraction of theaflavins from tea comprising the steps of
(a) contacting tea with water and ethyl acetate simultaneously or sequentially to form a dispersion where the weight ratio of water to tea is in the range of 0.5 to 10; and
(b) separating the ethyl acetate from the dispersion;
   to produce an ethyl acetate extract of theaflavins.

### DETAILED DESCRIPTION OF THE INVENTION

The present invention relates to an improved process for extraction of theaflavins from tea.

"Tea" for the purposes of the present invention means leaf material from *Camellia sinensis* var. *sinensis* or *Camellia sinensis* var. *assamica* which comprises theaflavins. Suitable raw material for the process of the invention is black tea and/or oolong tea. Black tea includes good quality tea as well as off-grades produced during black tea manufacture. The most preferred source for extraction of theaflavins is black tea.

The tea that is produced by complete fermentation process and that appears black/brown in color is referred to as black tea. The majority of tea produced is of this kind. Black tea manufacturing technology essentially involves disruption of the cellular integrity of tea shoots, thereby enabling the mixing of substrates (polyphenols) and the enzymes (polyphenol oxidases). This results in the initiation of a series of biochemical and chemical reactions with the uptake of atmospheric oxygen and formation of oxidized polyphenolic compounds that are characteristic of tea along with volatile flavor compounds that impart characteristic aroma to tea.

When the fermentation is carried out partially, the resultant teas are referred to as Oolong tea. Oolong tea is mainly consumed for its medical significance.

The process of the invention for extraction of theaflavins from tea comprises the steps of (a) contacting tea with water and ethyl acetate to form a dispersion where the weight ratio of water to tea is in the range of 0.5 to 10; and (b) separating the ethyl acetate from the dispersion; to produce an ethyl acetate extract of theaflavins.

The step (a) of contacting tea with water and ethyl acetate may be simultaneous or sequential. Thus, the ethyl acetate and water may be premixed to form a mixture before the tea is contacted with the mixture. Alternately the tea is contacted with the water to form a moist tea mass before the moist tea mass is contacted with the ethyl acetate. Thus, in a preferred method of forming the dispersion, step (a) comprises the steps of (i) contacting tea with water to form a uniform mass followed by (ii) agitating the uniform mass in ethyl acetate.

The step (a) of contacting tea with water and ethyl acetate is preferably carried out at a temperature in the range of 5°C to 50°C, more preferably in the range of 15 to 30°C. This contacting step (a) is preferably carried out at a pH in the range of 4 to 9, more preferably in the range of 5 to 8. The tea is preferably contacted with water and ethyl acetate for a period of time from 30 to 120 minutes, more preferably for 60 to 120 minutes. The weight ratio of water to tea, during step (a), is in the range of 0.5 to 10, preferably in the range of 0.5 to 8.0. The ratio of weight of tea to total weight of ethyl acetate and water during the step of extraction is preferably in the range of 1:10 to 1:75, more preferably in the range of 1:25 to 1:75. Thus the invention provides for extraction of tea with water and ethyl acetate where the yield of extraction is good only in a highly selective amount of water and in preferred embodiments selective amounts of ethyl acetate. Poor extraction efficiencies are obtained outside the defined limits.

Once the theaflavins are extracted into the ethyl acetate phase, the ethyl acetate is separated from the dispersion in step (b), for example, by simple decantation.

The theaflavins, extracted into the ethyl acetate phase are preferably concentrated to a powder, for example, by evaporating the ethyl acetate and drying the theaflavins to a powder.

### EXAMPLES

The invention will now be demonstrated with examples. The examples are by way of illustration only and do not limit the scope of invention in any manner.

Source and origin of the ingredients used in developing the invention

| Ingredient | Form of ingredient | Source and geographical origin of ingredient |
|---|---|---|
| Tea | Brooke Bond Red Label Tea (black tea) | Hindustan Unilever Limited, India |

### Comparative Example A and B: Effect of using water at various temperatures at various extraction times

Extraction of theaflavins was carried out using water at various temperature conditions. Samples of the theaflavin extract were taken at various extraction times. The extraction was carried out at a condition where weight ratio of tea to water was 1:50. The method to determine amount of theaflavins in an aqueous solution and the amount of theaflavins in tea is described below. The amount of theaflavins extracted as a percentage of total theaflavins in the tea was calculated and the data is summarized in Table - 1.

The amount of theaflavin in an extract is determined by HPLC analysis after suitable dilution of the sample with a stabilizing solution (0.5 g/L ascorbic acid, 0.5 g/L EDTA, 10% v/v acetonitrile and 90% v/v water). To determine the total theaflavin level present in black tea, a method in which quantitative extraction of theaflavin occurs is used which comprises of extracting the tea with 70% methanol for 10 min at water to leaf weight ratio of 50:1 and temperature of 80-85°C. When extraction of tea in aqueous medium or other extraction medium is studied which results in partial extraction of theaflavins then two samples are analysed a) the aqueous extraction medium (or any other extraction medium) and b) the spent tea is re-extracted with 70% methanol as described above. As the initial total level of theaflavins in tea is known the measurement of theaflavins in the extract and in the spent enables complete mass balance. This also enables quantification of any theaflavin degradation during the extraction process employed.

The theaflavin level is the sum of the level of the four main theaflavins as determined by HPLC. The amount of the four theaflavins in a sample is analysed by HPLC using an octadecylsilica (C18) column (Nova-pak ex. Waters, 3.9 mm i.d.x 150 mm) with detection at 380 nm column temperature of 40°C, injection volume of 20 µL and flow rate of 1 mL/min. The mobile phases for theaflavin analysis were 2% (v/v) acetic acid in water (mobile phase A) and acetonitirile (mobile phase B). A gradient from 8% B to 69 % B over 50 min was used to separate the four theaflavins (TF1,TF2, TF3, TF4) following which the column was equilibrated with 8% buffer A for 5 min. Pure theaflavins were used as standards for quantification.

**Table-1**

| Comparative Example | Temperature of extraction, °C | % theaflavins extracted over 40 minutes (average of 3 readings) |
|---|---|---|
| A | 25 | 5.3 |
| B | 85 | 33.3 |

The data in Table - 1 indicate that not more than an average of about 33% of the theaflavins can be extracted into water even at a temperature as high as 85°C.

### Examples 1 to 15: Extraction of theaflavins as per the process of the invention:

### Examples C to E: Extraction of theaflavins as per process outside the invention:

### Extraction of theaflavins was carried out using the following process:

Black tea (1 grams) was taken in a glass vessel and extracted with a mixture of water and ethyl acetate at various conditions as shown in Table -2. The parameters varied were (i) weight ratio of water to tea and (ii) weight ratio of tea to (ethyl acetate + water). The experiments were carried out at 25°C. The yield of total theaflavins was determined as described earlier and the data is summarized in Table - 2

### Example - F: Extraction of theaflavins as per the prior art:

Experiments were conducted using a known method of the prior art wherein ethyl acetate is used in a liquid-liquid extraction of an aqueous tea extract. Briefly, black tea was extracted with hot water at 85°C for 10 minutes at a water-to-tea ratio of 50:1 to obtain an aqueous extract of tea in hot water. The extract was cooled to 25°C and the theaflavins in the aqueous extract were further extracted with equal volume of ethyl acetate. The yield of theaflavins in the ethyl acetate fraction is summarised in Table - 2.

**Table - 2**

| Example | Water: tea ratio | % yield theaflavins |
|---|---|---|
| **Weight ratio of Tea: (Water + Ethyl Acetate) = 1:50** | | |
| 1 | 1.5 | 79.8 |
| 2 | 2.5 | 81.8 |
| 3 | 5.0 | 59.1 |
| 4 | 10.0 | 32.5 |

| **Weight ratio of Tea: (Water + Ethyl Acetate) = 1:10** | | |
|---|---|---|
| 5 | 0.5 | 42.2 |
| 6 | 1.0 | 53.6 |
| 7 | 2.0 | 51.7 |
| 8 | 3.0 | 46.6 |

| **Weight ratio of Tea: (Water + Ethyl Acetate) = 1:25** | | |
|---|---|---|
| 9 | 0.75 | 62.2 |
| 10 | 1.25 | 73.9 |
| 11 | 2.5 | 76.9 |
| 12 | 5.0 | 45.1 |
| C | 12.5 | 19.1 |
| D | 25 | 5.9 |

| **Weight ratio of Tea: (Water + Ethyl Acetate) = 1:75** | | |
|---|---|---|
| 13 | 2.25 | 75.1 |
| 14 | 3.75 | 89.3 |
| 15 | 7.5 | 34.5 |
| E | 22.5 | 29.7 |

| **Extraction using method of prior art** | | |
|---|---|---|
| F | - | 31.0 |

The data in Table - 2 indicate that the process as per the invention (Examples 1 to 15) provides for enhanced yield of theaflavins as compared to conditions outside the scope of the invention (Examples C to E). The yield is also generally better than is obtained with hot water extraction (Example B) or hot water extraction followed by liquid-liquid ethyl acetate extraction of the aqueous extract (Example F).

### Example - 16: Kinetics of theaflavins extraction:

Black tea (one gram) was taken in a glass vessel and extracted with a mixture of water (2.5 grams) and ethyl acetate (47.5 grams). The experiments were carried out at 25°C. The yield of total theaflavins was determined as described earlier and the data is summarized in Table - 3.

**Table -3**

| Time, minutes | % yield theaflavins |
|---|---|
| 0 | 0 |
| 30 | 58.4 |
| 60 | 71.8 |
| 90 | 82.5 |
| 120 | 100.0 |

The data in Table -3 indicate that very good yields are obtained for a contact time of between 30 and 120 minutes.

### Example 16 to 18: Effect of sequence of addition of the components

Example 16: An experiment was conducted with the following process condition: weight of the black tea (Assam black tea) = 1 grams
weight ratio of water: black tea = 2.5:1
weight ratio of tea: (water + ethyl acetate) = 1:52.5
temperature of extraction= 25 °C.
Extraction time = 90 minutes
In this experiment, water was added to black tea to form a uniform mass after which the ethyl acetate was added and mixed.

Example 17: An experiment was conducted with the process condition as per Example 16 except that ethyl acetate was first added to tea to form a uniform mass after which water was added.

Example 18: An experiment was conducted with the process condition as per Example 16 except that water and ethyl acetate were first mixed to form a dispersion. Black tea was then added to the dispersion under stirring.

The yield of extraction of theaflavins in each of Examples 16 to 18 is tabulated below in Table - 4. The data is an average of 3 readings.

**Table - 4**

| Example | % yield theaflavins, mean | % theaflavins, standard deviation |
|---|---|---|
| 16 | 73.8 | 3.9 |
| 17 | 64.7 | 3.6 |
| 18 | 73.9 | 4.9 |

The data in Table-4 indicate that any sequence of addition of the components during the extraction step gives a yield vastly superior to that obtained using hot water.

The invention thus provides for a process for enhanced extraction of theaflavins from tea which is a simple, economical and an easy-to-scale-up process.

## Claims

1. A process for extraction of theaflavins from tea comprising the steps of
(a) contacting tea with water and ethyl acetate
- simultaneously wherein the ethyl acetate and water are premixed to form a mixture before the tea is contacted with the mixture, or
- sequentially wherein the tea is contacted with the water to form a moist tea mass before the moist tea mass is contacted with the ethyl acetate, to form a dispersion where the weight ratio of water to tea is in the range of 0.5 to 10; and
(b) separating the ethyl acetate from the dispersion;
to produce an ethyl acetate extract of theaflavins.

2. A process as claimed in claim 1 wherein the step (a) of forming the dispersion comprises the steps of
(i) contacting tea with water to form a uniform mass followed by
(ii) agitating said mass in ethyl acetate.

3. A process as claimed in claim 1 or 2 wherein the weight ratio of water to tea in step (a) is in the range of 0.5 to 8.

4. A process as claimed in any one of the preceding claims wherein the ratio of weight of tea to total weight of water and ethyl acetate in step (a) is in the range of 1:10 to 1:75.

5. A process as claimed in any one of the preceding claims wherein the process comprises an additional step of drying the ethyl acetate extract of theaflavins to a powder.

6. A process as claimed in any one of the preceding claims wherein said tea is black tea, oolong tea or a mixture thereof.

7. A process as claimed in claim 6 wherein the tea is black tea.

8. A process as claimed in any one of the preceding claims wherein the step (a) of contacting tea with water and ethyl acetate is carried out at a temperature in the range of 5°C to 50°C.

9. A process as claimed in any one of the preceding claims wherein the step (a) of contact tea with water and ethyl acetate is carried out at a pH in the range of 4 to 9.

## Patentansprüche

1. Verfahren zur Extraktion von Theaflavinen aus Tee, umfassend die Schritte:
(a) In-Kontakt-Bringen von Tee mit Wasser und Ethylacetat,
- gleichzeitig, wobei das Ethylacetat und Wasser unter Bildung eines Gemisches vorvermischt werden, bevor der Tee mit dem Gemisch in Kontakt gebracht wird, oder
- sequentiell, wobei der Tee mit dem Wasser unter Bildung einer feuchten Teemasse in Kontakt gebracht wird, bevor die feuchte Teemasse mit dem Ethylacetat in Kontakt gebracht wird,
um eine Dispersion zu bilden, in der das Gewichtsverhältnis von Wasser zu Tee im Bereich von 0,5 bis 10 liegt, und
(b) Abtrennen des Ethylacetats von der Dispersion,
um einen Ethylacetat-Extrakt von Theaflavinen herzustellen.

2. Verfahren, wie es in Anspruch 1 beansprucht ist, wobei der Schritt (a) des Bildens der Dispersion die Schritte
(i) In-Kontakt-Bringen von Tee mit Wasser unter Bildung einer einheitlichen Masse, gefolgt von
(ii) Bewegen der Masse in Ethylacetat
umfasst.

3. Verfahren, wie es in Anspruch 1 oder 2 beansprucht ist, wobei das Gewichtsverhältnis von Wasser zu Tee in Schritt (a) im Bereich von 0,5 bis 8 liegt.

4. Verfahren, wie es in einem der vorangehenden Ansprüche beansprucht ist, wobei das Gewichtsverhältnis von Tee zu Gesamtgewicht an Wasser und Ethylacetat in Schritt (a) im Bereich von 1:10 bis 1:75 liegt.

5. Verfahren, wie es in einem der vorangehenden Ansprüche beansprucht ist, wobei das Verfahren einen zusätzlichen Schritt des Trocknens des Ethylacetat-Extrakts von Theaflavinen zu einem Pulver umfasst.

6. Verfahren, wie es in einem der vorangehenden Ansprüche beansprucht ist, wobei der Tee schwarzer Tee, Oolong-Tee oder ein Gemisch davon ist.

7. Verfahren, wie es in Anspruch 6 beansprucht ist, wobei der Tee schwarzer Tee ist.

8. Verfahren, wie es in einem der vorangehenden Ansprüche beansprucht ist, wobei der Schritt (a) des In-Kontakt-Bringens von Tee mit Wasser und Ethylacetat bei einer Temperatur im Bereich von 5 °C bis 50 °C durchgeführt wird.

9. Verfahren, wie es in einem der vorangehenden Ansprüche beansprucht ist, wobei der Schritt (a) des In-Kontakt-Bringens von Tee mit Wasser und Ethylacetat bei einem pH im Bereich von 4 bis 9 durchgeführt wird.

## Revendications

1. Procédé d'extraction des théaflavines du thé comprenant les étapes consistant à :
(a) mettre en contact le thé avec de l'eau et de l'acétate d'éthyle
✔ simultanément, dans lequel l'acétate d'éthyle et l'eau sont pré-mélangés pour former un mélange avant que le thé n'entre en contact avec le mélange, ou
✔ séquentiellement, dans lequel le thé est mis en contact avec l'eau pour former une masse de thé humide avant que la masse de thé humide n'entre en contact avec l'acétate d'éthyle, pour former une dispersion où le rapport en poids entre l'eau et le thé est dans la gamme de 0,5 à 10 ; et
(b) séparer l'acétate d'éthyle de la dispersion ; pour produire un extrait de théaflavines d'acétate d'éthyle.

2. Procédé selon la revendication 1, dans lequel l'étape (a) de formation de la dispersion comprend les étapes consistant à :
(i) mettre en contact le thé avec l'eau pour former une masse uniforme puis
(ii) agiter ladite masse dans de l'acétate d'éthyle.

3. Procédé selon la revendication 1 ou 2, dans lequel le rapport en poids de l'eau sur le thé dans l'étape (a) est dans la gamme de 0,5 à 8.

4. Procédé selon l'une quelconque des revendications précédentes, dans lequel le rapport en poids du thé sur le poids total d'eau et de l'acétate d'éthyle dans l'étape (a) est dans la gamme de 1:10 à 1:75.

5. Procédé selon l'une quelconque des revendications précédentes, dans lequel le procédé comprend une étape additionnelle de séchage de l'extrait d'acétate d'éthyle de théaflavines en une poudre.

6. Procédé selon l'une quelconque des revendications précédentes, dans lequel ledit thé est un thé noir, un thé oolong ou un mélange correspondant.

7. Procédé selon la revendication 6, dans lequel le thé est un thé noir.

8. Procédé selon l'une quelconque des revendications précédentes, dans lequel l'étape (a) de mise en contact du thé avec de l'eau et de l'acétate d'éthyle est réalisée à une température dans la gamme de 5°C à 50°C.

9. Procédé selon l'une quelconque des revendications précédentes, dans lequel l'étape (a) de mise en contact du thé avec de l'eau et de l'acétate d'éthyle est réalisée à un pH dans la gamme de 4 à 9.
